# EUROPEAN PATENT SPECIFICATION

(11) **EP 3 022 847 B1**
(45) Date of publication and mention of the grant of the patent: **22.09.2021**
(21) Application number: 14822473.6
(22) Date of filing: 11.07.2014
(51) Int. Cl.: G06F 3/0346, H04N 21/41, H04N 21/422, H04N 21/81, H04N 21/4722, G06F 3/0488, H04M 1/72412, H04M 1/67, G06F 3/01

(54) **PORTABLE TERMINAL AND METHOD FOR PROVIDING INFORMATION USING THE SAME**
TRAGBARES ENDGERÄT UND VERFAHREN ZUR BEREITSTELLUNG VON INFORMATIONEN DAMIT
TERMINAL PORTABLE ET PROCÉDÉ DE FOURNITURE D'INFORMATIONS L'UTILISANT

(30) Priority: 12.07.2013 KR 20130082079
(43) Date of publication of application: 25.05.2016
(73) Proprietor: Samsung Electronics Co., Ltd., Gyeonggi-do 16677 (KR)
(72) Inventor: LEE, Jae-keun, Goyang-si Gyeonggi-do 410-751 (KR); LEE, Min-ho, Gwacheon-si Gyeonggi-do 427-731 (KR)
(74) Representative: HGF
(86) International application number: PCT/KR2014/006255
(87) International publication number: WO 2015/005721

(56) References cited:
- EP-A1- 2 479 642
- WO-A1-2012/092247
- WO-A1-2013/067526
- KR-A- 20110 101 717
- KR-A- 20120 070 089
- US-A1- 2002 151 327
- US-A1- 2011 115 728
- US-A1- 2012 194 427
- US-A1- 2013 057 496
- US-A1- 2013 080 895
- US-A1- 2013 120 917
- US-A1- 2013 167 179

## Description

### Technical Field

The present disclosure relates to a portable terminal and a method for providing information using the same. More particularly, the present disclosure relates to a portable terminal and a method for providing information related to content currently being played back by an external content playback device using the same.

### Background Art

As content playback devices are provided with diverse contents, users wish to use additional information related to contents played back by the content playback devices. For example, when a digital television plays back broadcast content, the user may wish to know additional information such as story, actors or actresses, playback time, and related images of the current broadcast content.

In a related art, in order for the user to identify additional information related to currently played-back content, the user experiences an inconvenience by having to search for the additional information one by one using a portable terminal or a computer.

Recently, development of communication technology has enabled communication between content playback devices such as digital televisions and portable terminals such as smart phones. In particular, diverse contents and information related to the contents may be transmitted between content playback devices and portable terminals.

Therefore, there is a need for a method for acquiring additional information related to content currently being played back by a content playback device using a portable terminal with convenience and ease.

US2013/0120917 discloses a remote controller having a display, an acceleration sensor that detects an acceleration and a timer that measures elapsed time. A factor determination means determines whether a user is holding the remote controller in his/her hand using the acceleration sensor and the timer. A sleep control means turns on display of the display if the factor determination means determines that the user is holding the remote controller in his/her hand.

WO2013/067526 describes a software application and system that enables point-and-click interaction with a TV screen. Some embodiments utilize motion sensing and touchscreen input for gesture recognition interacting with video content or interactive device. The system enables the handheld device in the TV viewing area to replace or surpass the functionality of the traditional TV remote control, and also interface directly with visual feedback on the TV screen.

EP2479642 discloses a system and method for reducing power consumption in an electronic device by controlling the transition of the electronic device from a sleep mode to a full power mode.

WO2012092247 discloses a method and system for providing content related to a displayed program. The method and system of the present disclosure includes a second screen application for a second screen device, such as a tablet (e.g., iPad) that provides rich content experiences in conjunction with displayed primary content (e.g., a movie from a Blu-Ray disc).

The above information is presented as background information only to assist with an understanding of the present disclosure. No determination has been made, and no assertion is made, as to whether any of the above might be applicable as prior art with regard to the present disclosure.

### Disclosure of Invention

### Solution to Problem

Aspects of the present disclosure are to address at least the above-mentioned problems and/or disadvantages and to provide at least the advantages described below. Accordingly, an aspect of the present disclosure is to provide a portable terminal and a method for providing information related to content currently being played back by an external content playback device using the same.

In accordance with an aspect of the present disclosure, an information providing method of a portable terminal according to claim 1 is provided.

The standby screen may include a display item to show the additional information related to the content, and an execution item to run an additional service related to the content.

The method may further include displaying an execution screen to run the additional service corresponding to a selected execution item when the execution item to run the additional service related to the content is selected.

The standby screen may be a lock screen of the portable terminal.

The standby screen may include at least one of a lock release item to unlock the portable terminal, and a control item to control the content playback device.

The method may further include removing the standby screen from a display screen and displaying a starting screen of the portable terminal when a lock release command is input to the lock release item to unlock the portable terminal.

The displaying of the received additional information may include requesting the additional information related to the content from the content playback device when it is determined that the detected movement pattern of the portable terminal is the predetermined pattern, and receiving the additional information related to the content from the content playback device.

The displaying of the received additional information may include identifying the content currently being played back by the content playback device when it is determined that the detected movement pattern of the portable terminal is the predetermined pattern, requesting the additional information related to the content from an external server corresponding to the content, and receiving the additional information from the external server.

The detecting the movement pattern of the portable terminal includes, when an additional information providing function of the portable terminal is turned on, detecting the movement pattern of the portable terminal.

The content playback device may take a picture of a predetermined area, and when it is determined that a user of the portable terminal is not present in the predetermined area or is not looking at the content playback device, the content playback device may not transmit the additional information related to the content to the portable terminal.

In accordance with another aspect of the present disclosure, a portable terminal in accordance with claim 11 is provided.

The controller may control the display to display on the standby screen a display item to show the additional information related to the content, and an execution item to run an additional service related to the content.

When a user command to select the execution item to run the additional service related to the content is input through the input unit, the controller may control the display to display an execution screen to run the additional service corresponding to the selected execution item.

The standby screen may be a lock screen of the portable terminal.

The controller may control the display to display on the standby screen at least one of a lock release item to unlock the portable terminal, and a control item to control the content playback device.

When a lock release command is input to the lock release item to unlock the portable terminal, the controller may control the display to remove the standby screen from a display screen, and to display a starting screen of the portable terminal.

When it is determined that the detected movement pattern of the portable terminal is the predetermined pattern, the controller may control the communication unit to request the additional information related to the content from the content playback device, and to receive the additional information related to the content from the content playback device.

When it is determined that the detected movement pattern of the portable terminal is the predetermined pattern, the controller may control the communication unit to identify the content currently being played back by the content playback device, to request the additional information related to the content from an external service corresponding to the content, and to receive the additional information from the external server.

When an additional information providing function of the portable terminal is turned on, the controller may control the sensor to detect the movement pattern of the portable terminal while the portable terminal is locked.

The content playback device may take a picture of a predetermined area, and when it is determined that a user of the portable terminal is not present in the predetermined area or is not looking at the content playback device, the content playback device may not transmit the additional information related to the content to the portable terminal.

Additional and/or other aspects and advantages of the present disclosure will be set forth in part in the description which follows and, in part, will be obvious from the description, or may be learned by practice of the present disclosure.

Other aspects, advantages, and salient features of the disclosure will become apparent to those skilled in the art from the following detailed description, which, taken in conjunction with the annexed drawings, discloses various embodiments of the present disclosure.

### Advantageous Effects of Invention

As described above, the user may be provided with additional information and an additional service related to content currently being played back by a content playback device without the user's separate input using a portable terminal.

### Brief Description of Drawings

The above and other aspects, features, and advantages of certain embodiments of the present disclosure will be more apparent from the following description taken in conjunction with the accompanying drawings, in which:
FIG. 1 illustrates an information providing system according to an embodiment of the present disclosure;
FIG. 2 is a schematic block diagram of a configuration of a portable terminal according to an embodiment of the present disclosure;
FIG. 3 is a detailed block diagram of a configuration of a portable terminal according to an embodiment of the present disclosure;
FIGS. 4, 5, 6, 7, 8, 9, 10, 11, and 12 illustrate standby screens to provide additional information related to currently played-back content according to diverse various embodiments of the present disclosure;
FIG. 13 is a schematic block diagram of a configuration of a display device according to an embodiment of the present disclosure;
FIG. 14 is a flowchart of a method for providing information using a portable terminal according to an embodiment of the present disclosure; and
FIGS. 15, 16, and 17 are sequence diagrams of a method for providing information using an information providing system according to an embodiment of the present disclosure.
FIG. 18 is a view to explain a movement pattern of a portable terminal according to an embodiment of the present disclosure.
FIG. 19 is a view illustrating a lock release screen including a display item and an execution item according to another embodiment of the present disclosure.

The same reference numerals are used to represent the same elements throughout the drawings.

### Best Mode for Carrying out the Invention

The following description with reference to the accompanying drawings is provided to assist in a comprehensive understanding of various embodiments of the present disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims.

It is to be understood that the singular forms "a," "an," and "the" include plural referents unless the context clearly dictates otherwise. Thus, for example, reference to "a component surface" includes reference to one or more of such surfaces.

In the following description, same drawing reference numerals are used for the same elements even in different drawings. The matters defined in the description, such as detailed construction and elements, are provided to assist in a comprehensive understanding of the present disclosure. Thus, it is apparent that the various embodiments of the present disclosure can be carried out without those specifically defined matters.

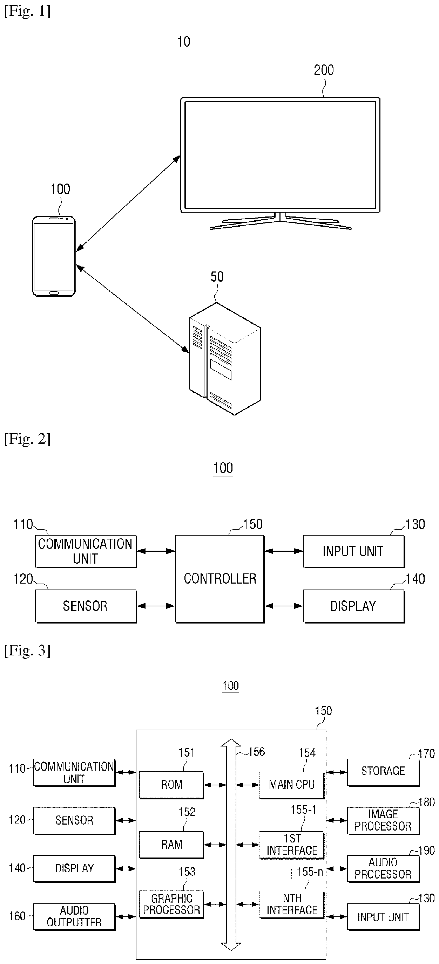

FIG. 1 illustrates an information providing system 10 according to an embodiment of the present disclosure.

Referring to FIG. 1, the information providing system 10 may include a portable terminal 100, a content playback device 200, and an information providing server 50. The portable terminal 100 may be a smart phone, but this is merely an exemplary implementation. The portable terminal 100 may also be implemented with diverse portable terminals such as a Personal Digital Assistant (PDA), a tablet computer, a mobile phone, a notebook computer, and other similar or suitable devices. The content playback device 200 may be a digital television, but this is merely an exemplary implementation. The content playback device 200 may also be implemented with diverse electronic devices such as a set-top box, a Digital Video Disc (DVD) player, a Blu-ray Disc (BD) player, and a desktop computer.

Firstly, communication linkage may be performed between the portable terminal 100 and the content playback device 200. More specifically, when an additional information providing function is turned on, the portable terminal 100 may discover a content playback device in the vicinity of the portable terminal 100. When at least one content playback device is discovered, the portable terminal 100 may select one of the at least one content playback device according to input of the user, and request communication linkage with the selected content playback device 200. When the portable terminal 100 receives a communication linkage acceptance signal from the content playback device 200, the portable terminal 100 may communicate with the content playback device 200.

When the portable terminal 100 is linked to the content playback device 200, the portable terminal 100 may detect a movement pattern of the portable terminal 100 using a movement detection sensor. When a detected movement pattern satisfies a predetermined condition (for example, a movement pattern of the user lifting the portable terminal 100), the portable terminal 100 may receive additional information related to content currently being played back by the content playback device 200. More specifically, when the portable terminal 100 detects that the user lifts the portable terminal 100, the portable terminal 100 may receive additional information related to content currently being played back by the content playback device 200 from the content playback device 200 or the external information providing server 50. However, receiving additional information related to content after detecting that a movement pattern satisfies the predetermined condition is merely an embodiment. The portable terminal 100 may receive and store additional information related to content even before a movement pattern satisfies the predetermined condition.

Subsequently, the portable terminal 100 may display the received additional information related to the currently played-back content on a standby screen. At this time, the portable terminal 100 may display on the standby screen at least one of a display item to show the additional information related to the content, an execution item to run an additional service related to the content, a lock release item to unlock the portable terminal 100, and a control item to control the content playback device 200.

Accordingly, the user may acquire additional information related to currently played-back content using the portable terminal 100 intuitively and easily.

The portable terminal 100 according to an embodiment of the present disclosure is described below in greater detail with reference to FIGS. 2 to 12.

FIG. 2 is a schematic block diagram of a configuration of a portable terminal according to an embodiment of the present disclosure.

Referring to FIG. 2, the portable terminal 100 may include a communication unit 110, a sensor 120, an input unit 130, a display 140, and a controller 150.

The communication unit 110 communicates with an external device. In particular, the communication unit 110 communicates with the content playback device 200 or the information providing server 50. More specifically, the communication unit 110 may transmit an additional information request signal to the content playback device 200, and receive additional information related to content from the content playback device 200.

The sensor 120 detects a movement pattern of the portable terminal 100. In particular, the sensor 120 may detect a movement pattern of the portable terminal 100 using diverse movement detection sensors such as an acceleration sensor, a gyro sensor, and a geomagnetic sensor.

The input unit 130 may receive a user command to control the portable terminal 100. In particular, the input unit 130 may receive a user command to select one of the execution item, the lock release item, and the control item on the standby screen displayed on the display 140.

The display 140 may output image data according to control of the controller 150. In particular, the display 140 may display a standby screen including additional information related to content received externally. When the portable terminal 100 is a smart phone, the standby screen may be a lock screen.

The controller 150 may control overall operation of the portable terminal 100 according to a user command input through the input unit 130. In particular, when it is determined that a movement pattern of the portable terminal 100 detected by the sensor 120 is a predetermined pattern, the controller 150 may control the communication unit 110 to receive additional information related to content currently being played back by the content playback device 200, and control the display 140 to display the received additional information on the standby screen of the portable terminal 100.

More specifically, when the additional information providing function is turned on, the controller 150 may control the communication unit 110 to communicate with the content playback device 200.

In addition, when the portable terminal 100 is linked to the content playback device 200 and when it is determined that a movement pattern of the portable terminal 100 detected by the sensor 120 is a predetermined pattern (for example, a movement pattern of the user lifting the portable terminal 100), the controller 150 may control the communication unit 110 to receive additional information related to content currently being played back by the content playback device 200.

In an embodiment of the present disclosure, when it is determined that a movement pattern of the portable terminal 100 detected by the sensor 120 is the predetermined pattern, the controller 150 may control the communication unit 110 to request and receive additional information related to currently played-back content from the content playback device 200.

In another embodiment of the present disclosure, when it is determined that a movement pattern of the portable terminal 100 detected by the sensor 120 is the predetermined pattern, the controller 150 may control the communication unit 110 to identify currently played-back content from the content playback device 200, and to request and receive additional information related to the currently played-back content from an external information providing server 50 corresponding to the currently played-back content.

In yet another embodiment of the present disclosure, before detecting a movement pattern of the portable terminal 100 using the sensor 120, the controller 150 may periodically receive additional information (for example, Electronic Program Guide (EPG) information, etc.) related to contents which may be played back by the content playback device 200. When it is determined that a movement pattern of the portable terminal 100 detected by the sensor 120 is the predetermined pattern, the controller 150 may identify currently played-back content from the content playback device 200 and search for additional information related to the currently played-back content from among the pre-stored additional information related to the contents.

In addition, the controller 150 may control the display 140 to display the received additional information on a standby screen. The standby screen is a screen displayed after a display screen is turned on. When the portable terminal 100 is a smart phone, the standby screen may be a lock screen.

In particular, the controller 150 may control the display 140 to display on the standby screen a display item to show the additional information related to the currently played-back content, and an execution item to run an additional service related to the currently played-back content. For example, when the content is broadcast content, the display item may include diverse additional information such as the title, actors or actresses, and the story of the broadcast content, and the execution item may include an execution icon to provide content related to the current broadcast content.

At this time, when a user command is input through the input unit 130 to select the execution item to run an additional service related to the currently played-back content, the controller 150 may control the display 140 to display an execution screen to run the additional service corresponding to the selected execution item.

In addition, the controller 150 may control the display 140 to display on the standby screen at least one of a lock release item to unlock the portable terminal 100, and a control item to control the content playback device 200. The lock release item may include a password input icon to enter a password to unlock the portable terminal 100, and the control item may include a control icon to control a channel, volume, power supply, or the like of the content playback device 200.

In particular, when a user command is input through the lock release item to unlock the portable terminal 100, the controller 150 may control the display 140 to remove the standby screen from the display screen and display a starting screen of the portable terminal 100. More specifically, when a password is entered to the lock release item, the controller 150 may control the display 140 to remove the standby screen from the display screen and display a starting screen to run an application or a program which is installed in the portable terminal 100.

The aforementioned portable terminal 100 displays additional information by detecting a predetermined movement without the user's separate input so that the user may easily and conveniently be provided with additional information or additional services regarding content currently being played back by the content playback device 200.

FIG. 3 is a detailed block diagram of a configuration of the portable terminal 100 according to an embodiment of the present disclosure.

Referring to FIG. 3, the portable terminal 100 may include a communication unit 110, a sensor 120, a display 140, an audio outputter 160, a storage 170, an image processor 180, an audio processor 190, an input unit 130, and a controller 150.

For example, FIG. 3 illustrates the components of the portable terminal 100 including diverse functions such as a content sharing function, a communication function, a video playback function, and a display function. Therefore, according to an embodiment, a portion of the components illustrated in FIG. 3 may be omitted or changed, and other components may be added.

The communication unit 110 communicates with diverse types of external devices according to diverse types of communication methods. In particular, the communication unit 110 may communicate with an external content playback device 200 in order to provide additional information related to content currently being played back by the content playback device 200.

In particular, the communication unit 110 may include diverse communication chips such as a Wireless Fidelity (Wi-Fi) chip, a Bluetooth chip, and a wireless communication chip. The Wi-Fi chip and the Bluetooth chip perform communication in a Wi-Fi method and a Bluetooth method respectively. When the Wi-Fi chip or the Bluetooth chip is used, diverse types of connection information such as a SubSystem Identification (SSID) and a session key are transmitted and received first, and then after communication is connected, diverse information can be transmitted and received. The wireless communication chip is a chip that performs communication according to diverse communication standards such as Institute of Electrical and Electronics Engineers (IEEE), Zigbee, 3rd Generation (3G), 3rd Generation Partnership Project (3GPP), and Long Term Evolution (LTE) standards.

If the communication unit 110 uses the Bluetooth method, the communication unit 110 may discover a content playback device to communicate with. When at least one content playback device is discovered, the communication unit 110 may communicate with a content playback device selected by the user among the at least one content playback device.

In addition, if the communication unit 110 uses the Wi-Fi method, the communication unit 110 may directly communicate with a previously connected content playback device or a predetermined content playback device.

When the portable terminal 100 communicates with the content playback device 200, the communication unit 110 may transmit diverse request signals and control signals to the content playback device 200. For example, the communication unit 110 may transmit an additional information request signal and a content playback device identification request signal to the content playback device 200, and also transmit a control signal corresponding to an input user command to the content playback device 200.

The sensor 120 may detect a movement pattern of the portable terminal 100. At this time, the sensor 120 may detect a movement pattern of the portable terminal 100 using an acceleration sensor, a gyro sensor, or a geomagnetic sensor. Although the portable terminal 100 enters into standby mode, power is supplied to the sensor 120 so that the sensor 120 may detect whether a movement pattern satisfies a predetermined condition (for example, a pattern in which the portable terminal 100 is lifted).

The predetermined condition may be the pattern in which the portable terminal 100 is lifted, but this is merely an embodiment. The sensor 120 may also detect a condition in which the display 140 of the portable terminal 100 faces upwards and the portable terminal 100 is lifted.

In another embodiment, when the sensor 120 is implemented with a camera, the sensor 120 detects the user's eyes and thus determines whether the user is looking at the portable terminal 100.

The display 140 displays a video frame processed by the image processor 180 from image data received from an image receiver (not shown), and at least one of diverse screens generated by a graphic processor 153. In particular, the display 140 may display a standby screen including additional information related to externally received content.

The audio outputter 160 outputs diverse notification sounds or a voice message as well as diverse audio data processed by the audio processor 190.

The storage 170 stores diverse modules to drive the portable terminal 100. For example, the storage 170 may include software including a base module, a sensing module, a communication module, a presentation module, a web browser module, and a service module. The base module is a basic module that processes a signal transmitted from hardware included in the portable terminal 100 and transmits the signal to an upper layer module. The sensing module is a module that collects information from diverse sensors and analyzes and manages the collected information, including a face recognition module, a voice recognition module, a motion recognition module, a Near Field Communication (NFC) recognition module, and so on. The presentation module is a module that composes a display screen, including a multimedia module to play back and output multimedia content and a User Interface (UI) rendering module to process UIs and graphics. The communication module is a module that communicates with external devices. The web browser module is a module that performs web browsing and accesses a web server. The service module is a module including diverse applications to provide diverse services.

The storage 170 may include diverse program modules as described above. However, according to the type and characteristics of the portable terminal 100, a portion of the program modules may be omitted or changed, and other program modules may be added.

The image processor 180 processes externally received image data. The image processor 180 may perform image data processing such as decoding, scaling, noise filtering, frame rate conversion, and resolution conversion.

The audio processor 190 processes audio data. The audio processor 190 may perform audio data processing such as decoding, amplification, and noise filtering. Audio data processed by the audio processor 190 may be output to the audio outputter 160.

The input unit 130 receives a user command to control overall operation of the portable terminal 100. The input unit 130 may be implemented with a touch screen, but is not limited thereto. The input unit 130 may be implemented with other input apparatuses (for example, a mouse, a keyboard, or the like).

The controller 150 controls overall operation of the portable terminal 100 using programs stored in the storage 170.

The controller 150 may include a Random-Access Memory (RAM) 151, a Read-Only Memory (ROM) 152, a graphic processor 153, a main Central Processing Unit (CPU) 154, first to Nth interfaces 155-1 to 155-N, and a bus 156 as shown in FIG. 3. The RAM 151, the ROM 152, the graphic processor 153, the main CPU 154, and the first to Nth interfaces 155-1 to 155-N may be connected to one another via the bus 156.

The ROM 152 stores a set of commands to boot up the system. When a turn-on command is input and the power is supplied, the main CPU 154 copies an Operating System (OS) stored in the storage 170 to the RAM 151 and executes the OS according to the commands stored in the ROM 152 so that the system can boot up. When the boot-up is complete, the main CPU 154 copies diverse application programs stored in the storage 170 to the RAM 151, and runs the copied application programs so that diverse operations can be performed.

The graphic processor 153 generates a screen including diverse objects such as an icon, an image, and text, using an operator (not shown) and a renderer (not shown). The operator operates property values of each object, such as a coordinate value, a shape, a size and a color, according to a layout of the screen using a control command received from the input unit 130. The renderer generates a screen having diverse layouts including objects based on the property values operated by the operator. The screen generated by the renderer is displayed on a display area of the display 140. In particular, the graphic processor 153 may generate a UI which includes feed including video.

The main CPU 154 accesses the storage 170 and boots up the system using the OS stored in the storage 170. In addition, the main CPU 154 performs diverse operations using diverse programs, contents, and data stored in the storage 170.

The first to Nth interfaces 155-1 to 155-N are connected to the aforementioned components. One of the interfaces may be a network interface that is connected to an external device through a network.

In particular, when the additional information providing function is turned on by the user, the controller 150 may control the communication unit 110 to be linked to an adjacent content playback device 200. The additional information providing function is a function for providing additional information related to content currently being played back by the external content playback device 200. The additional information providing function may be turned on or off by the user's input using a setting menu. In addition, the additional information providing function may be turned on by a predetermined motion. For example, when the user's motion of shaking the portable terminal 100 a predetermined number of times is detected, the controller 150 may turn on the additional information providing function.

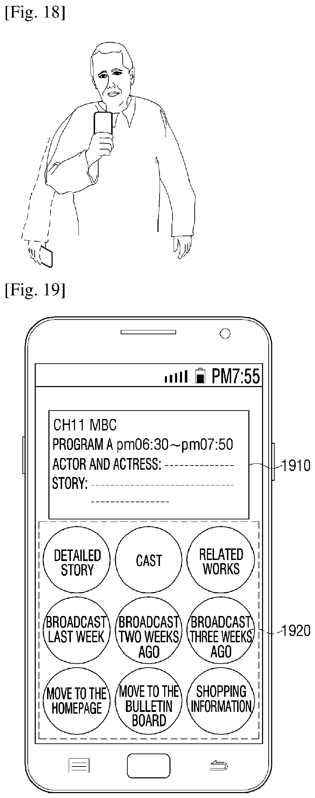

FIG. 18 is a view to explain a movement pattern of a portable terminal according to an embodiment of the present disclosure.

When the portable terminal 100 is linked to the content playback device 200, the controller 150 may determine whether a movement pattern detected by the sensor 120 satisfies a predetermined condition. For example, with reference to FIG. 18, the controller 150 may determine whether a movement pattern of the portable terminal 100 detected by the sensor 120 is a pattern of lifting the portable terminal 100 towards the face of the user with a front side of the display 140 shown as an arm is raised in a semicircle as shown. However, it is merely an embodiment that the predetermined condition is the pattern of lifting the portable terminal 100 towards the face of the user as an arm is raised in a semicircle. The predetermined condition may be a different movement pattern. For example, the controller 150 may determine whether a movement pattern of the portable terminal 100 detected by the sensor 120 is a pattern of flipping the portable terminal 100 so that the front side of the portable terminal 100 (that is, a side having the display 140) faces upwards or whether a movement pattern of the portable terminal 100 detected by the sensor 120 is a pattern of lifting the portable terminal 100 with the front side of the portable terminal 100 shown and maintaining this position during a predetermined period of time.

In the above embodiment of the present disclosure, the portable terminal 100 detects the movement pattern of the portable terminal 100, but this is merely an embodiment. The content playback device 200 may detect the movement pattern of the portable terminal 100. For example, the content playback device 200 may detect the movement pattern of the user lifting the portable terminal 100 using a camera. When the content playback device 200 detects the movement pattern of the user lifting the portable terminal 100, the content playback device 200 may transmit the portable terminal 100 a signal indicating that the movement pattern of the portable terminal 100 satisfies the predetermined condition.

When the movement pattern satisfies the predetermined condition, the controller 150 may control the communication unit 110 to externally receive additional information related to content currently being played back by the content playback device 200. In particular, the controller 150 may receive different types of additional information according to types of the currently played-back content.

In an embodiment of the present disclosure, when a movement pattern satisfies the predetermined condition, the controller 150 may control the communication unit 110 to transmit an additional information request signal to request additional information related to currently played-back content to the content playback device 200. When the content playback device 200 searches pre-stored data (for example, EPG data) and transmits the additional information related to the currently played-back content to the portable terminal 100, the controller 150 may control the communication unit 110 to receive the additional information related to the currently played-back content from the content playback device 200.

In another embodiment of the present disclosure, when a movement pattern satisfies the predetermined condition, the controller 150 may control the communication unit 110 to transmit a content identification request signal to identify currently played-back content to the content playback device 200. When the content playback device 200 transmits information (for example, a channel name, a channel number, a program title, etc.) regarding the currently played-back content to the portable terminal 100, the controller 150 may control the communication unit 110 to receive the information regarding the currently played-back content from the content playback device 200. In addition, the controller 150 may control the communication unit 110 to transmit an additional information request signal to request additional information related to the currently played-back content to the external information providing server 50. The additional information request signal may include the information regarding the currently played-back content which is received from the content playback device 200. Subsequently, the controller 150 may control the communication unit 110 to receive the additional information related to the currently played-back content from the information providing server 50.

In yet another embodiment of the present disclosure, when the portable terminal 100 is linked to the content playback device 200, the controller 150 may periodically or aperiodically receive additional information data (for example, EPG data) related to content from the content playback device 200 before a movement pattern satisfies the predetermined condition. When a movement pattern satisfies the predetermined condition, the controller 150 may control the communication unit 110 to transmit a content identification request signal to identify content currently being played back by the content playback device 200 to the content playback device 200. When the content playback device 200 transmits information (for example, a channel name, a channel number, a program title, etc.) regarding the currently played-back content to the portable terminal 100, the controller 150 may control the communication unit 110 to receive the information regarding the currently played-back content from the content playback device 200. Subsequently, the controller 150 may search for additional information related to the currently played-back content among the pre-stored additional information data.

The aforementioned additional information related to content may include information regarding an additional service related to the content as well as additional information related to the content. For example, when content is broadcast content, additional information related to the content may include an additional service to directly run related broadcast content as well as information such as the story of the broadcast content, and actors or actresses.

In addition, additional information related to content may differ according to the type of the content. For example, when currently played-back content is general broadcast content, additional information related to the content may include information such as the story of the broadcast content, actors or actresses, product information, location information of a restaurant, and information regarding a related broadcast program. For another example, when currently played-back content is audition broadcast content, additional information related to the content may include information regarding participants of the audition broadcast program and real-time vote information. For yet another example, when currently played-back content is home shopping broadcast content, additional information related to the content may include information regarding a currently broadcast home shopping product, and information regarding a phone number and a website address to buy the home shopping product. For yet another example, when currently played-back content is donation broadcast content, additional information related to the content may include information regarding a currently broadcast recipient, and a phone number and a website address for donation. For yet another example, when currently played-back content is advertisement content, additional information related to the content may include information regarding a currently advertised product, a website address to acquire information regarding the currently advertised product, and information used to buy the currently advertised product.

When the portable terminal 100 receives or searches for information related to content currently being played back by the content playback device 200, the controller 150 may control the display 140 to display the information on the standby screen. The standby screen is a screen in standby mode from after the display screen of the portable terminal 100 is turned on until the display screen enters into the starting screen. When the portable terminal 100 is a smart phone, the standby screen may be a lock screen.

In particular, the controller 150 may display on the standby screen at least one of a display item to show additional information related to currently played-back content, an execution item to run an additional service related to currently played-back content, a lock release item to unlock the portable terminal 100, and a control item to control the content playback device 200.

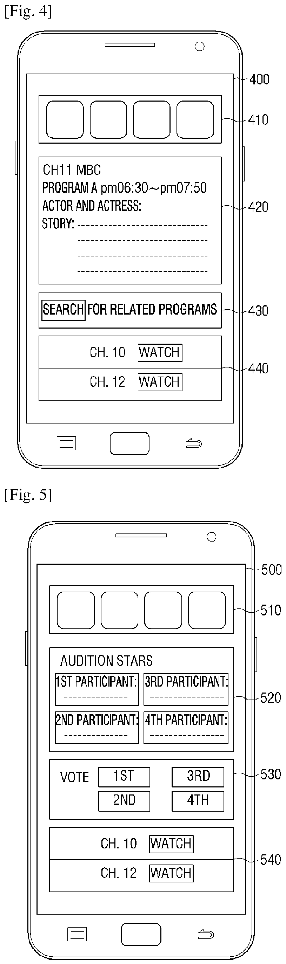

FIGS. 4, 5, 6, 7, 8, 9, 10, 11, and 12 illustrate standby screens to provide additional information related to currently played-back content according to various embodiments of the present disclosure.

For example, referring to FIG. 4, when currently played-back content is general broadcast content such as a soap opera and a variety show, the controller 150 may control the display 140 to display on a standby screen 400 a lock release item 410 to enter a password to unlock the portable terminal 100, a display item 420 to provide additional information such as actors or actresses, a story, and a playback time of the currently played-back content, an execution item 430 to run an additional service to search for a broadcast program related to the currently played-back content, and a control item 440 to run another broadcast content of the content playback device 200 as shown in FIG. 4. In particular, when the execution item 430 is selected, the controller 150 searches for a broadcast program related to the currently played-back content, and provides the user with the found broadcast program.

For another example, referring to FIG. 5, when currently played-back content is audition broadcast content, the controller 150 may control the display 140 to display on a standby screen 500 a lock release item 510 to enter a password to unlock the portable terminal 100, a display item 520 to provide additional information such as participants of the currently played-back audition broadcast program content, an execution item 530 to run a real-time vote service for the currently played-back audition broadcast content, and a control item 540 to run another broadcast content of the content playback device 200 as shown in FIG. 5. In particular, when one of a plurality of icons included in the execution item 530 is selected, the controller 150 may control the communication unit 110 to transmit a command to vote for a participant corresponding to the selected icon to an external server.

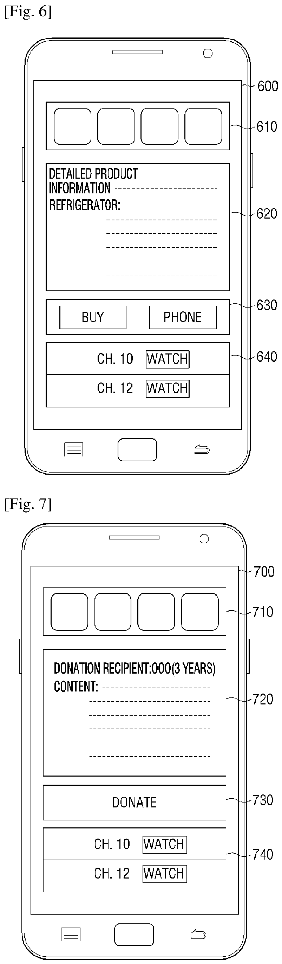

For yet another example, referring to FIG. 6, when currently played-back content is home shopping broadcast content, the controller 150 may control the display 140 to display on a standby screen 600 a lock release item 610 to enter a password to unlock the portable terminal 100, a display item 620 to provide information regarding a currently broadcast product, an execution item 630 to run a service to buy the currently broadcast product or a call connection service to ask about the currently broadcast product, and a control item 640 to run another broadcast content of the content playback device 200 as shown in FIG. 6. In particular, when the "Buy" icon is selected from among the icons included in the execution item 630, the controller 150 may control the display 140 to display a product purchase screen to buy the currently broadcast product. In addition, when the "Phone" icon is selected on the execution item 630, the controller 150 may make a phone call to a phone number to buy or ask about the currently broadcast product.

For yet another example, referring to FIG. 7, when currently played-back content is donation broadcast content, the controller 150 may control the display 140 to display on a standby screen 700 a lock release item 710 to enter a password to unlock the portable terminal 100, a display item 720 to provide detailed information regarding a currently broadcast donation recipient, an execution item 730 to run a service to donate money to the currently broadcast donation recipient, and a control item 740 to run another broadcast content of the content playback device 200 as shown in FIG. 7. In particular, when the execution item 730 is selected, the controller 150 may control the communication unit 110 to transmit a payment request signal to donate a predetermined amount of money to the currently broadcast donation recipient to an external server.

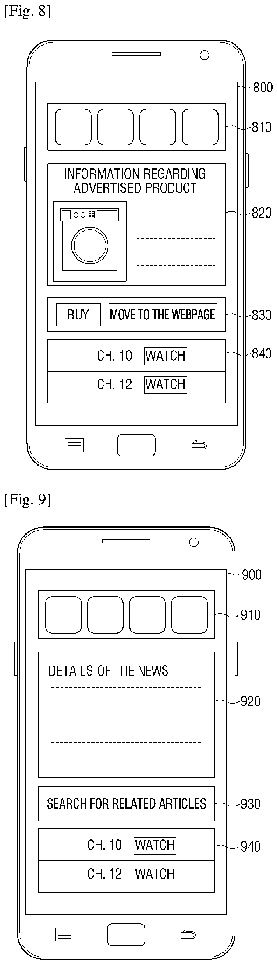

For yet another example, referring to FIG. 8, when currently played-back content is advertisement content, the controller 150 may control the display 140 to display on a standby screen 800 a lock release item 810 to enter a password to unlock the portable terminal 100, a display item 820 to provide information regarding a currently advertised product, an execution item 830 to run a service to buy the currently advertised product or a service to move to a web page to provide detailed information regarding the currently advertised product, and a control item 840 to run another broadcast content of the content playback device 200 as shown in FIG. 8. In particular, when the "Buy" icon is selected from among the icons included in the execution item 830, the controller 150 may control the display 140 to display a product purchase screen to buy the currently advertised product. In addition, when the "Move to the web page" icon is selected on the execution item 830, the controller 150 may control the display 140 to access and display a web page to provide detailed information regarding the currently advertised product.

For yet another example, referring to FIG. 9, when currently played-back content is news content, the controller 150 may control the display 140 to display on a standby screen 900 a lock release item 910 to enter a password to unlock the portable terminal 100, a display item 920 to provide the details of currently broadcast news, an execution item 930 to provide a service to search for an article related to the currently broadcast news, and a control item 940 to run another broadcast content of the content playback device 200 as shown in FIG. 9. In particular, when the execution item 930 is selected, the controller 150 may control the display 140 to display a screen including a searched article related to the currently broadcast news.

The types of the contents described with reference to FIGS. 4 to 9 are merely examples. Additional information related to other types of content may also be provided. For example, when currently played-back content is movie content, the controller 150 may provide additional information and an additional service related to the currently played-back movie content.

In addition, when a lock release command is input to the lock release item on the standby screen to run a general function of the portable terminal 100 without identifying additional information related to content, the controller 150 may control the display 140 to remove the standby screen and display the starting screen of the portable terminal 100.

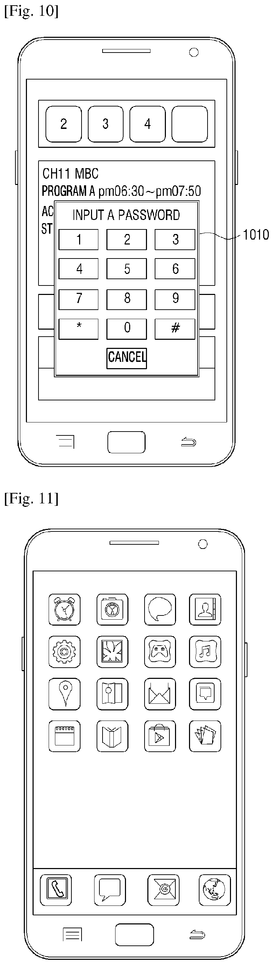

More specifically, referring to FIG. 10, when the lock release item 410 displayed on an upper portion of the display 140 is touched as shown in FIG. 4, the controller 150 may control the display 140 to display a password input item 1010 to enter a password. When a password is entered through the password input item 1010, the controller 150 may control the display 140 to display the entered password on the lock release item 410. When a password predetermined for lock release is entered, the controller 150 may control the display 140 to remove the standby screen and display the starting screen of the portable terminal 100 to run at least one application or program as shown in FIG. 11.

The portable terminal 100 is unlocked by entering a password to the lock release item 410 as described above, but this is merely an embodiment. The portable terminal 100 may be unlocked using other methods. For example, the controller 150 may control the display 140 to display a lock release item to input the user's predetermined touch (for example, the user's touch to drag a display item displayed on a left portion to the right) as a lock release command on a standby screen. When the user's predetermined touch is input to the lock release item, the controller 150 may control the display 140 to remove the standby screen and display the starting screen of the portable terminal 100.

In addition, when a control item is selected, the controller 150 may control the communication unit 110 to transmit a control signal corresponding to the selected control item to the content playback device 200. For example, when an icon to view channel 10 is selected from the control item 440 shown in FIG. 4, the controller 150 may control the communication unit 110 to generate a control signal to select channel 10 and transmit the control signal to the content playback device 200. The control item 440 shown in FIG. 4 is scrollable in order to provide the user with diverse channels. For example, when the user's touch to drag upwards is input on an area on which the control item 440 is displayed, the controller 150 may control the display 140 to elevate broadcast channels displayed on the control item 440.

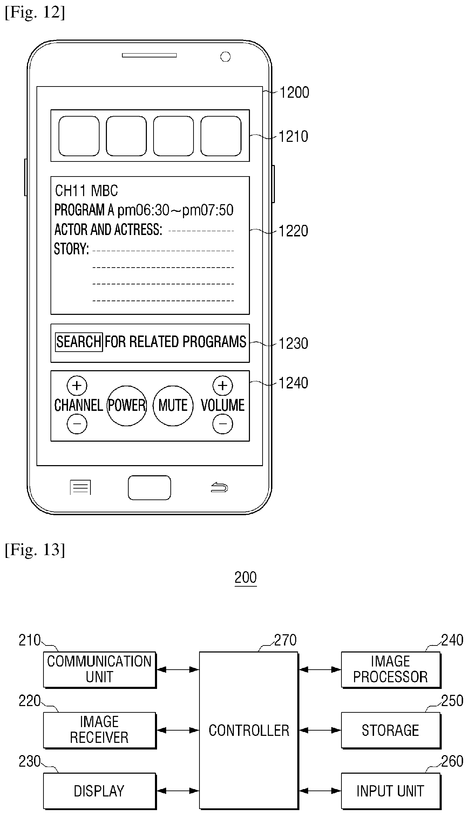

As described with reference to FIGS. 4 to 9, the control item is an item to select another broadcast channel, but this is merely an embodiment. The control item may include different types of icons to control the content playback device 200. For example, with reference to FIG. 12, the controller 150 may control the display 140 to display a control item 1240 including a channel switch icon, a volume control icon, a power control icon, and a mute icon on the standby screen 1200. Also shown in FIG. 12 is a lock release item 1210, display item 1220, and execution item 1230.

The lock release item, the display item, the execution item, and the control item are displayed as shown in FIGS. 4 to 12, but these are merely various embodiments. The lock release item, the display item, the execution item, and the control item may be displayed at different positions.

FIG. 19 is a view illustrating a lock release screen including a display item and an execution item according to another embodiment of the present disclosure.

In another embodiment of the present disclosure, the controller 150 may provide a display item and an execution item using a related-art lock screen. More specifically, with reference to FIG. 19, the controller 150 may control the display 140 to display a display item 1910 to provide brief information regarding currently played-back content, and execution items 1920 to provide additional services related to currently played-back content. The execution items 1920 may be items that do not only provide additional services but also receive a pattern to unlock the portable terminal 100. When one of the execution items 1920 is selected, the controller 150 may provide an additional service corresponding to the selected execution item. When a dragging command having a predetermined pattern is input onto the execution items 1920, the controller 150 may determine whether the input predetermined pattern is a pattern to unlock the portable terminal 100, and may display an execution screen on the display 140 when the input predetermined pattern is the pattern to unlock the portable terminal 100.

As described above, the portable terminal 100 may display additional information related to externally played-back content according to the user's simple movement (for example, a movement of lifting the portable terminal 100) without the user's separate input.

FIG. 13 is a schematic block diagram of a configuration of a display device according to an embodiment of the present disclosure.

Referring to FIG. 13, the content playback device 200 is described below. The content playback device 200 may include a communication unit 210, an image receiver 220, a display 230, an image processor 240, a storage 250, an input unit 260, and a controller 270.

The communication unit 210 communicates with diverse types of external devices according to diverse types of communication methods. In particular, the communication unit 210 may communicate with an external portable terminal 100 in order to provide information related to content currently being played back by the content playback device 200.

In particular, the communication unit 210 may include diverse communication chips such as a Wi-Fi chip, a Bluetooth chip, and a wireless communication chip. The Wi-Fi chip and the Bluetooth chip perform communication in a Wi-Fi method and a Bluetooth method respectively. When the Wi-Fi chip or the Bluetooth chip is used, diverse types of connection information such as an SSID and a session key are transmitted and received first, and then, after communication is connected, diverse information can be transmitted and received. The wireless communication chip is a chip that performs communication according to diverse communication standards such as IEEE, Zigbee, 3G, 3GPP, and LTE.

The image receiver 220 may externally receive an image. In particular, the image receiver 220 may receive broadcast image content from an external broadcast station, receive image content from an external server in real time, or receive image content from an external device (for example, a Digital Versatile Disc (DVD) player, a set-top box, or the like).

The display 230 outputs image data that is received by the image receiver 220 and is processed by the image processor 240.

The image processor 240 processes image data received from the image receiver 220. The image processor 240 may perform image data processing such as decoding, scaling, noise filtering, frame rate conversion, and resolution conversion.

The storage 250 stores diverse data and programs to control the content playback device 200. In particular, the storage 250 may store EPG data to provide additional information related to content.

The input unit 260 receives a user command to control the content playback device 200. The input unit 260 may be implemented with a remote control, but this is merely an embodiment. The input unit 250 may also be implemented with an input device such as a motion input unit, a voice input unit, a pointing device, a mouse, and a keyboard.

The controller 270 controls overall operation of the content playback device 200. More specifically, when a communication linkage request signal is received from the portable terminal 100, the controller 270 may control the communication unit 210 to communicate with the portable terminal 100.

When a movement pattern satisfies a predetermined condition, the controller 270 may control the communication unit 210 to receive an additional information request signal from the portable terminal 100. In another embodiment, the controller 270 may detect a movement pattern of the portable terminal 100 using a camera and transmit to the portable terminal 100 a signal indicating that the movement pattern satisfies the predetermined condition. When the portable terminal 100 receives the signal from the content playback device 200, the portable terminal 100 may transmit an additional information request signal to the content playback device 200.

When the additional information request signal is received from the portable terminal 100, the controller 270 may generate additional information related to currently played-back content using EPG data stored in the storage 250. More specifically, when a signal to request additional information related to currently played-back content is received from the portable terminal 100, the controller 270 may identify the currently played-back content, extract information related to the currently played-back content from stored EPG data, and generate additional information based on the extracted information.

The controller 270 may generate the additional information using the EPG data as described above, but this is merely an embodiment. The controller 270 may control the communication unit 210 to receive additional information from an external information providing server 50 and transmit the additional information to the portable terminal 100.

In addition, before an additional information request signal is received from the portable terminal 100, the controller 270 may control the communication unit 210 to periodically or aperiodically transmit EPG data to the portable terminal 100.

On the other hand, the controller 270 may determine whether to transmit additional information related to content to the portable terminal 100 by determining whether the user is looking at the content playback device 200. More specifically, when it is determined that the user of the portable terminal 100 is not present in a predetermined area or is not looking at the content playback device 200 while a camera (not shown) takes pictures of the predetermined area, the controller 270 may not transmit additional information related to content to the portable terminal 100 in response to an additional information request signal. In other words, when the user moves the portable terminal 100 without looking at the content playback device 200, there is a strong possibility that the user may not intend to identify additional information regarding currently played-back content but intends to use other functions of the portable terminal 100. Accordingly, when it is determined that the user is not looking at the content playback device 200, the controller 270 may not transmit additional information related to content to the portable terminal 100.

In addition, when a control signal is received from the portable terminal 100, the controller 270 may perform a function corresponding to the received control signal. For example, when a control signal to select a specific channel is received from the portable terminal 100, the controller 270 may control the image receiver 220 to select the specific channel and receive a broadcast image via the channel. For another example, when a mute control signal is received from the portable terminal 100, the controller 270 may control an audio outputter (not shown) to mute sound.

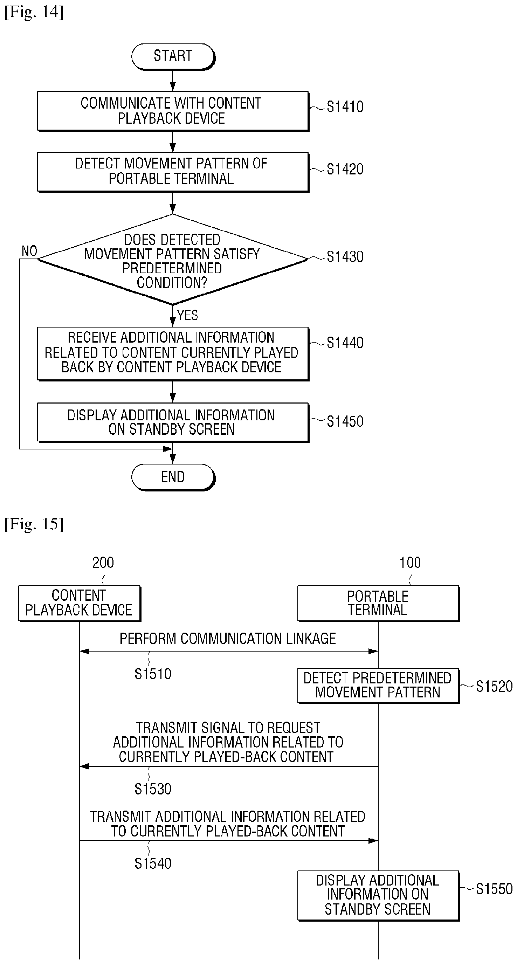

A method for providing information according to various embodiments of the present is described with reference to FIGS. 14 to 17.

FIG. 14 is a flowchart of a method for providing information using the portable terminal 100 according to an embodiment of the present disclosure.

Firstly, the portable terminal 100 is linked to the content playback device 200 at operation S1410. More specifically, when an additional information providing function is turned on, the portable terminal 100 may discover at least one content playback device around the portable terminal 100 and communicate with a content playback device selected by the user from among the at least one content playback device.

Subsequently, the portable terminal 100 detects a movement pattern of the portable terminal 100 using a movement detection sensor at operation S1420. More specifically, the portable terminal 100 may detect a movement pattern of the portable terminal 100 using diverse movement detection sensors such as an acceleration sensor, a gyro sensor, and a geomagnetic sensor.

Subsequently, the portable terminal 100 determines whether the detected movement pattern satisfies a predetermined condition at operation S1430. The predetermined condition may be a movement of lifting the portable terminal 100.

When the detected movement pattern satisfies the predetermined condition at operation S1430, the portable terminal 100 externally receives additional information related to content currently being played back by the content playback device 200 at operation S1440. In an embodiment of the present disclosure, when the movement pattern of the portable terminal 100 detected by the movement detection sensor is the predetermined pattern, the portable terminal 100 may request and receive additional information related to currently played-back content from the content playback device 200. In another embodiment of the present disclosure, when the movement pattern of the portable terminal 100 detected by the movement detection sensor is the predetermined pattern, the portable terminal 100 may identify currently played-back content from the content playback device 200, and request and receive additional information related to the currently played-back content from the information providing server 50 corresponding to the currently played-back content. In yet another embodiment of the present disclosure, before detecting a movement pattern of the portable terminal 100, the portable terminal 100 may periodically receive additional information (for example, EPG information) related to contents which may be played back by the content playback device 200. When the movement pattern of the portable terminal 100 detected by the movement detection sensor is the predetermined pattern, the portable terminal 100 may identify currently played-back content from the content playback device 200, and search for additional information related to the currently played-back content from among the pre-stored additional information related to the contents.

Subsequently, the portable terminal 100 displays the received additional information on a standby screen at operation S1450. The standby screen is a screen firstly displayed after a display screen is turned on. When the portable terminal 100 is a smart phone, the standby screen may be a lock screen. In particular, the portable terminal 100 may display on the standby screen at least one of a display item to show the additional information related to the currently played-back content, an execution item to run an additional service related to the currently played-back content, a lock release item to unlock the portable terminal 100, and a control item to control the content playback device 200.

Accordingly, the user may identify additional information related to currently played-back content using the display item, run an additional service related to the currently played-back content using the execution item, run a function of the portable terminal 100 using the lock release item, or control the external content playback device 200 using the control item.

In other words, the user may identify additional information related to content played back by the content playback device 200 by a simple movement of lifting the portable terminal 100 without a complicated input to the portable terminal 100.

FIG. 15 is a sequence diagram of a method for providing information at an information providing system 10 according to an embodiment of the present disclosure.

Firstly, the portable terminal 100 is linked to the content playback device 200 at operation S1510. The portable terminal 100 may be linked to the content playback device 200 manually by the user's input. Alternatively, when the portable terminal 100 is located within a predetermined distance of the content playback device 200, the portable terminal 100 may be automatically linked to the content playback device 200.

Subsequently, the portable terminal 100 detects a predetermined movement pattern at operation S1520. The predetermined movement pattern may be a movement pattern of lifting the portable terminal 100. That is, the portable terminal 100 may detect the user's movement of lifting the portable terminal 100.

Subsequently, the portable terminal 100 transmits to the content playback device 200 an additional information request signal to request additional information related to currently played-back content at operation S1530.

The content playback device 200 transmits the additional information to the portable terminal 100 in response to the additional information request signal at operation S1540. More specifically, the content playback device 200 may identify the currently played-back content in response to the additional information request signal, and generate the additional information related to the currently played-back content using data related to the content such as pre-stored EPG data. Subsequently, the content playback device 200 may transmit the generated additional information to the portable terminal 100.

When the additional information is received, the portable terminal 100 displays the additional information on a standby screen at operation S1550. At this time, the portable terminal 100 may display on the standby screen at least one of a display item to show the additional information related to the currently played-back content, an execution item to run an additional service related to the currently played-back content, a lock release item to unlock the portable terminal 100, and a control item to control the content playback device 200.

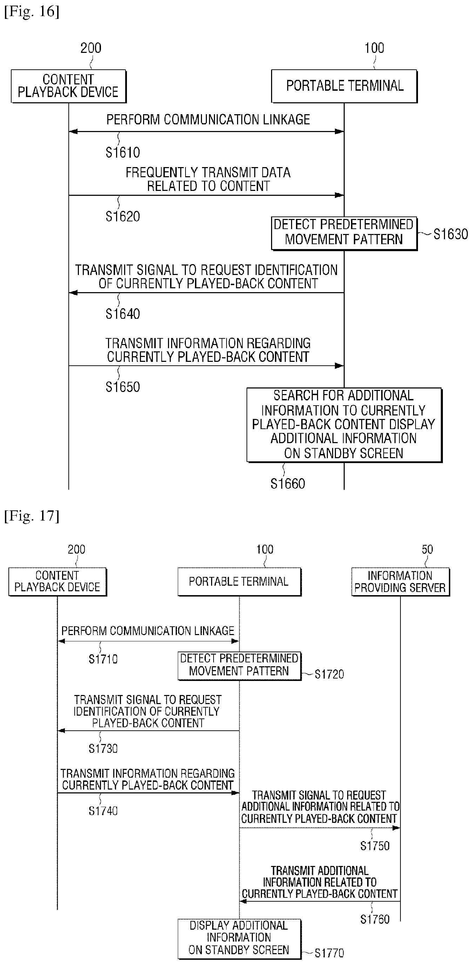

FIG. 16 is a sequence diagram of a method for providing information at an information providing system 10 according to another embodiment of the present disclosure.

Firstly, the portable terminal 100 is linked to the content playback device 200 at operation S1610. The portable terminal 100 may be linked to the content playback device 200 manually by the user's input as described above. Alternatively, when the portable terminal 100 is located within a predetermined distance of the content playback device 200, the portable terminal 100 may be automatically linked to the content playback device 200.

Subsequently, the content playback device 200 periodically transmits data related to content to the portable terminal 100 at operation S1620. The data related to the content may be EPG data, but is not limited thereto.

Subsequently, the portable terminal 100 detects a predetermined movement pattern at operation S1630. The predetermined movement pattern may be a movement pattern of lifting the portable terminal 100.

Subsequently, the portable terminal 100 transmits to the content playback device 200 a request signal to identify currently played-back content at operation S1640.

The content playback device 200 transmits to the portable terminal 100 information regarding the currently played-back content in response to the request signal at operation S1650. The information regarding the currently played-back content may include the title and a source of the content. For example, when the content is broadcast content, information regarding the content may include a broadcast program title, a channel number, a channel name, etc.

Subsequently, the portable terminal 100 searches for additional information related to the currently played-back content, and displays the additional information on a standby screen at operation S1660. More specifically, the portable terminal 100 may identify the currently played-back content from the information regarding the content, search for additional information related to the currently played-back content from among the received and pre-stored data related to the content, and display the found additional information on the standby screen. At this time, the portable terminal 100 may display on the standby screen at least one of a display item to show the additional information related to the currently played-back content, an execution item to run an additional service related to the currently played-back content, a lock release item to unlock the portable terminal 100, and a control item to control the content playback device 200.

FIG. 17 is a sequence diagram of a method for providing information at an information providing system 10 according to yet another embodiment of the present disclosure.

Firstly, the portable terminal 100 is linked to the content playback device 200 at operation S1710. The portable terminal 100 may be linked to the content playback device 200 manually by the user's input as described above. Alternatively, when the portable terminal 100 is located within a predetermined distance of the content playback device 200, the portable terminal 100 may be automatically linked to the content playback device 200.

Subsequently, the portable terminal 100 detects a predetermined movement pattern at operation S1720. The predetermined movement pattern may be a movement pattern of lifting the portable terminal 100.

Subsequently, the portable terminal 100 transmits to the content playback device 200 a request signal to identify currently played-back content at operation S1730.

The content playback device 200 transmits to the portable terminal 100 information regarding the currently played-back content in response to the request signal at operation S1740. The information regarding the currently played-back content may include the title and a source of the content, and a corresponding information providing server 50.

Subsequently, the portable terminal 100 transmits to the information providing server 50 a signal to request additional information related to the currently played-back content at operation S1750.

The information providing server 50 transmits to the portable terminal 100 the additional information in response to the signal at operation S1760. The information providing server 50 may generate the additional information related to the currently played-back content using a database which stores additional information.

When the additional information is received, the portable terminal 100 displays the additional information on a standby screen at operation S1770. At this time, the portable terminal 100 may display on the standby screen at least one of a display item to show the additional information related to the currently played-back content, an execution item to run an additional service related to the currently played-back content, a lock release item to unlock the portable terminal 100, and a control item to control the content playback device 200.

Using diverse methods for providing information as described above, the user may be provided with additional information and an additional service related to content currently being played back by a content playback device without the user's separate input using a portable terminal.

A program code to perform an information providing method according to the various embodiments of the present disclosure may be stored in diverse types of non-transitory recording media. More specifically, the program code may be stored in diverse types of non-transitory computer readable recording media such as RAM, flash memory, ROM, Erasable Programmable ROM (EPROM), Electronically Erasable and Programmable ROM (EEPROM), registers, hard disks, removable disks, memory cards, Universal Serial Bus (USB) memory, and Compact Disk (CD)-ROM.

While the present disclosure has been shown and described with reference to various embodiments thereof, it will be understood by those skilled in the art that various changes in form and details may be made therein without departing from the scope of the present disclosure as defined by the appended claims.

## Claims

1. An information providing method of a portable terminal (100), the method comprising:
communicating (S1410) with a content playback device (200);
detecting (S1420) a movement pattern of the portable terminal (100) using a movement detection sensor (120);
receiving (S1440) additional information related to a first content currently being played back by the content playback device (200) when the detected movement pattern of the portable terminal (100) satisfies conditions of a predetermined pattern (S1430); and
displaying (S1450) a second content related to the received additional information on a standby screen (400) of the portable terminal (100), the second content being different from the first content,
wherein the standby screen (400) is a lock screen of the portable terminal (100), the lock screen including a control item to control the content playback device, and
wherein the content playback device (200) takes a picture of a predetermined area, and when it is determined that a user of the portable terminal (100) is not present in the predetermined area or is not looking at the content playback device (200), the content playback device (200) does not transmit the additional information related to the content to the portable terminal (100).

2. The method as claimed in claim 1, wherein the standby screen (400) includes a display item (420; 1910) to show the additional information related to the content, and an execution item (430; 1920) to run an additional service related to the content.

3. The method as claimed in claim 2, further comprising:
displaying an execution screen to run the additional service corresponding to a selected execution item when the execution item to run the additional service related to the content is selected.

4. The method as claimed in claim 1, wherein the standby screen (400) includes a lock release item (410; 1210) to unlock the portable terminal.

5. The method as claimed in claim 4, further comprising:
removing the standby screen (400) from a display screen (140); and
displaying a starting screen (Fig. 11) of the portable terminal when a lock release command is input to the lock release item (410; 1210) to unlock the portable terminal.

6. The method as claimed in claim 1, wherein the displaying of the received additional information comprises:
requesting (S1530) the additional information related to the content from the content playback device (200) when it is determined that the detected movement pattern of the portable terminal (100) is the predetermined pattern; and
receiving (S1540) the additional information related to the content from the content playback device (200).

7. The method as claimed in claim 1, wherein the displaying of the received additional information comprises:
identifying (S1730, S1740) the content currently being played back by the content playback device (200) when it is determined that the detected movement pattern of the portable terminal (100) is the predetermined pattern;
requesting (S1750) the additional information related to the content from an external server (50) corresponding to the content; and
receiving (S1760) the additional information from the external server (50).

8. The method as claimed in claim 1, wherein the detecting of the movement pattern of the portable terminal comprises, when an additional information providing function of the portable terminal is turned on, detecting the movement pattern of the portable terminal (100).

9. The method as claimed in any preceding claim, wherein the receiving the additional information is performed when the detected movement pattern satisfies the conditions of the predetermined pattern and the portable terminal (100) faces upward.

10. A portable terminal (100) comprising:
a communication unit (110) configured to communicate with a content playback device (200);
a sensor (120) configured to detect a movement pattern of the portable terminal;
an input unit (130) configured to receive a user command;
a display (140) configured to display an image; and
a controller (150) configured to receive additional information related to a first content currently being played back by the content playback device (200) when the detected movement pattern of the portable terminal (100) satisfies conditions of a predetermined pattern, and to display a second content related to the received additional information on a standby screen (400) of the portable terminal (100), the second content being different from the first content,
wherein the standby screen (400) is a lock screen of the portable terminal (100), the lock screen including a control item to control the content playback device, and
wherein the content playback device (200) takes a picture of a predetermined area, and when it is determined that a user of the portable terminal (100) is not present in the predetermined area or is not looking at the content playback device (200), the content playback device (200) does not transmit the additional information related to the content to the portable terminal (100).

11. The portable terminal as claimed in claim 10, wherein the controller (150) controls the display (140) to display on the standby screen (400) a display item (420) to show the additional information related to the content, and an execution item (430) to run an additional service related to the content.

12. The portable terminal as claimed in claim 11, wherein, when a user command to select the execution item (430) to run the additional service related to the content is input through the input unit (130), the controller (150) controls the display (140) to display an execution screen to run the additional service corresponding to the selected execution item.

13. The portable terminal as claimed in claim 10, wherein the controller (150) controls the display (140) to display on the standby screen (400) a lock release item (410) to unlock the portable terminal (100).

## Patentansprüche

1. Informationsbereitstellungsverfahren eines tragbaren Endgeräts (100), wobei das Verfahren umfasst:
Kommunizieren (S1410) mit einem Inhaltswiedergabegerät (200);
Erfassen (S1420) eines Bewegungsmusters des tragbaren Endgeräts (100) unter Verwendung eines Bewegungserfassungssensors (120);
Empfangen (S1440) zusätzlicher Informationen im Zusammenhang mit einem ersten Inhalt, der gegenwärtig von dem Inhaltswiedergabegerät (200) wiedergegeben wird, wenn das erfasste Bewegungsmuster des tragbaren Endgeräts (100) Bedingungen eines vorbestimmten Musters erfüllt (S1430), und
Anzeigen (S1450) eines zweiten Inhalts im Zusammenhang mit den empfangenen zusätzlichen Informationen auf einem Standby-Bildschirm (400) des tragbaren Endgeräts (100), wobei sich der zweite Inhalt vom ersten Inhalt unterscheidet,
wobei der Standby-Bildschirm (400) ein Sperrbildschirm des tragbaren Endgeräts (100) ist, wobei der Sperrbildschirm ein Steuerelement zum Steuern des Inhaltswiedergabegeräts umfasst, und
wobei das Inhaltswiedergabegerät (200) ein Bild eines vorbestimmten Bereichs aufnimmt und, wenn ermittelt wird, dass ein Benutzer des tragbaren Endgeräts (100) nicht in dem vorbestimmten Bereich anwesend ist oder nicht auf das Inhaltswiedergabegerät (200) schaut, das Inhaltswiedergabegerät (200) die zusätzlichen Informationen im Zusammenhang mit dem Inhalt nicht an das tragbare Endgerät (100) sendet.

2. Verfahren nach Anspruch 1, wobei der Standby-Bildschirm (400) ein Anzeigeelement (420; 1910) zum Zeigen der zusätzlichen Informationen im Zusammenhang mit dem Inhalt und ein Ausführungselement (430; 1920) zum Ausführen eines zusätzlichen Dienstes im Zusammenhang mit dem Inhalt umfasst.

3. Verfahren nach Anspruch 2, ferner umfassend:
Anzeigen eines Ausfuhrungsbildschirms zum Ausführen des zusätzlichen, einem ausgewählten Ausführungselement entsprechenden Dienstes, wenn das Ausführungselement zum Ausführen des zusätzlichen Dienstes im Zusammenhang mit dem Inhalt ausgewählt ist.

4. Verfahren nach Anspruch 1, wobei der Standby-Bildschirm (400) ein Sperrfreigabeelement (410; 1210) umfasst, um das tragbare Endgerät zu entsperren.

5. Verfahren nach Anspruch 4, ferner umfassend:
Entfernen des Standby-Bildschirms (400) von einem Anzeigebildschirm (140); und
Anzeigen eines Startbildschirms (Fig. 11) des tragbaren Endgeräts, wenn ein Sperrfreigabebefehl in das Sperrfreigabeelement (410; 1210) eingegeben wird, um das tragbare Endgerät zu entsperren.

6. Verfahren nach Anspruch 1, wobei das Anzeigen der empfangenen zusätzlichen Informationen umfasst:
Anfordern (S1530) der zusätzlichen Informationen im Zusammenhang mit dem Inhalt vom Inhaltswiedergabegerät (200), wenn ermittelt wird, dass das erfasste Bewegungsmuster des tragbaren Endgeräts (100) das vorbestimmte Muster ist; und
Empfangen (S1540) der zusätzlichen Informationen im Zusammenhang mit dem Inhalt von der Inhaltswiedergabevorrichtung (200).

7. Verfahren nach Anspruch 1, wobei das Anzeigen der empfangenen zusätzlichen Informationen umfasst:
Identifizieren (S1730, S1740) des Inhalts, der gegenwärtig von dem Inhaltswiedergabegerät (200) wiedergegeben wird, wenn ermittelt wird, dass das erfasste Bewegungsmuster des tragbaren Endgeräts (100) das vorbestimmte Muster ist;
Anfordern (S1750) der zusätzlichen Informationen im Zusammenhang mit dem Inhalt von einem externen Server (50), der dem Inhalt entspricht; und
Empfangen (S1760) der zusätzlichen Informationen von dem externen Server (50).

8. Verfahren nach Anspruch 1, wobei das Erfassen des Bewegungsmusters des tragbaren Endgeräts, wenn eine zusätzliche Informationsbereitstellungsfunktion des tragbaren Endgeräts eingeschaltet ist, das Erfassen des Bewegungsmusters des tragbaren Endgeräts (100) umfasst.

9. Verfahren nach einem der vorhergehenden Ansprüche, wobei das Empfangen der zusätzlichen Informationen durchgeführt wird, wenn das erfasste Bewegungsmuster die Bedingungen des vorbestimmten Musters erfüllt und das tragbare Endgerät (100) nach oben zeigt.

10. Tragbares Endgerät (100), umfassend:
eine Kommunikationseinheit (110), die konfiguriert ist, um mit einem Inhaltswiedergabegerät (200) zu kommunizieren;
einen Sensor (120), der konfiguriert ist, um ein Bewegungsmuster des tragbaren Endgeräts zu erfassen;
eine Eingabeeinheit (130), die konfiguriert ist, um einen Benutzerbefehl zu empfangen;
eine Anzeige (140), die konfiguriert ist, um ein Bild anzuzeigen; und
eine Steuerung (150), die konfiguriert ist, um zusätzliche Informationen im Zusammenhang mit einem ersten Inhalt zu empfangen, der gegenwärtig von dem Inhaltswiedergabegerät (200) wiedergegeben wird, wenn das erfasste Bewegungsmuster des tragbaren Endgeräts (100) Bedingungen eines vorbestimmten Musters erfüllt, und um einen zweiten Inhalt im Zusammenhang mit den empfangenen zusätzlichen Informationen auf einem Standby-Bildschirm (400) des tragbaren Endgeräts (100) anzuzeigen, wobei sich der zweite Inhalt vom ersten Inhalt unterscheidet,
wobei der Standby-Bildschirm (400) ein Sperrbildschirm des tragbaren Endgeräts (100) ist, wobei der Sperrbildschirm ein Steuerelement zum Steuern des Inhaltswiedergabegeräts umfasst, und
wobei das Inhaltswiedergabegerät (200) ein Bild eines vorbestimmten Bereichs aufnimmt und, wenn ermittelt wird, dass ein Benutzer des tragbaren Endgeräts (100) nicht in dem vorbestimmten Bereich anwesend ist oder nicht auf das Inhaltswiedergabegerät (200) schaut, das Inhaltswiedergabegerät (200) die zusätzlichen Informationen im Zusammenhang mit dem Inhalt nicht an das tragbare Endgerät (100) sendet.

11. Tragbares Endgerät nach Anspruch 10, wobei die Steuerung (150) die Anzeige (140) zum Anzeigen, auf dem Standby-Bildschirm (400), eines Anzeigeelements (420) zum Zeigen der zusätzlichen Informationen im Zusammenhang mit dem Inhalt und ein Ausführungselement (430) zum Ausführen eines zusätzlichen Dienstes im Zusammenhang mit dem Inhalt steuert.

12. Tragbares Endgerät nach Anspruch 11, wobei, wenn ein Benutzerbefehl zum Auswählen des Ausführungselements (430) zum Ausführen des zusätzlichen Dienstes im Zusammenhang mit dem Inhalt über die Eingabeeinheit (130) eingegeben wird, die Steuerung (150) die Anzeige (140) zum Anzeigen eines Ausführungsbildschirms zum Ausführen des zusätzlichen, dem ausgewählten Ausführungselement entsprechenden Dienstes steuert.

13. Tragbares Endgerät nach Anspruch 10, wobei die Steuerung (150) die Anzeige (140) steuert, um auf dem Standby-Bildschirm (400) ein Sperrfreigabeelement (410) zum Entsperren des tragbaren Endgeräts (100) anzuzeigen.

## Revendications

1. Procédé de délivrance d'informations d'un terminal portable (100), le procédé comprenant :
la communication (S1410) avec un dispositif de lecture de contenu (200) ;
la détection (S1420) d'un modèle de mouvement du terminal portable (100) à l'aide d'un capteur de détection de mouvement (120) ;
la réception (S1440) d'informations supplémentaires relatives à un premier contenu actuellement en cours de lecture par le dispositif de lecture de contenu (200) lorsque le modèle de mouvement détecté du terminal portable (100) remplit des conditions d'un modèle prédéterminé (S1430) ; et
l'affichage (S1450) d'un deuxième contenu relatif aux informations supplémentaires reçues sur un écran de veille (400) du terminal portable (100), le deuxième contenu étant différent du premier contenu,
dans lequel l'écran de veille (400) est un écran de verrouillage du terminal portable (100), l'écran de verrouillage comprenant un élément de commande pour commander le dispositif de lecture de contenu, et
dans lequel le dispositif de lecture de contenu (200) prend une photo d'une zone prédéterminée, et lorsqu'il est déterminé qu'un utilisateur du terminal portable (100) n'est pas présent dans la zone prédéterminée ou ne regarde pas le dispositif de lecture de contenu (200), le dispositif de lecture de contenu (200) ne transmet pas les informations supplémentaires relatives au contenu au terminal portable (100).

2. Procédé selon la revendication 1, dans lequel l'écran de veille (400) comprend un élément d'affichage (420 ; 1910) pour montrer les informations supplémentaires relatives au contenu, et un élément d'exécution (430 ; 1920) pour exécuter un service supplémentaire relatif au contenu.

3. Procédé selon la revendication 2, comprenant en outre :
l'affichage d'un écran d'exécution pour exécuter le service supplémentaire correspondant à un élément d'exécution sélectionné lorsque l'élément d'exécution pour exécuter le service supplémentaire relatif au contenu est sélectionné.

4. Procédé selon la revendication 1, dans lequel l'écran de veille (400) comprend un élément de déverrouillage (410 ; 1210) pour déverrouiller le terminal portable.

5. Procédé selon la revendication 4, comprenant en outre :
le retrait de l'écran de veille (400) d'un écran d'affichage (140) ; et
l'affichage d'un écran de démarrage (figure 11) du terminal portable lorsqu'une commande de déverrouillage est entrée dans l'élément de déverrouillage (410 ; 1210) pour déverrouiller le terminal portable.

6. Procédé selon la revendication 1, dans lequel l'affichage des informations supplémentaires reçues comprend :
la demande (S1530) des informations supplémentaires relatives au contenu en provenance du dispositif de lecture de contenu (200) lorsqu'il est déterminé que le modèle de mouvement détecté du terminal portable (100) est le modèle prédéterminé ; et
la réception (S1540) des informations supplémentaires relatives au contenu en provenance du dispositif de lecture de contenu (200).

7. Procédé selon la revendication 1, dans lequel l'affichage des informations supplémentaires reçues comprend :
l'identification (S1730, S1740) du contenu actuellement en cours de lecture par le dispositif de lecture de contenu (200) lorsqu'il est déterminé que le modèle de mouvement détecté du terminal portable (100) est le modèle prédéterminé ;
la demande (S1750) des informations supplémentaires relatives au contenu en provenance d'un serveur externe (50) correspondant au contenu ; et
la réception (S1760) des informations supplémentaires en provenance du serveur externe (50).

8. Procédé selon la revendication 1, dans lequel la détection du modèle de mouvement du terminal portable comprend, lorsqu'une fonction de délivrance d'informations supplémentaires du terminal portable est activée, la détection du modèle de mouvement du terminal portable (100).

9. Procédé selon l'une quelconque des revendications précédentes, dans lequel la réception des informations supplémentaires est effectuée lorsque le modèle de mouvement détecté remplit les conditions du modèle prédéterminé et que le terminal portable (100) est tourné vers le haut.

10. Terminal portable (100), comprenant :
une unité de communication (110) configurée pour communiquer avec un dispositif de lecture de contenu (200) ;
un capteur (120) configuré pour détecter un modèle de mouvement du terminal portable ;
une unité d'entrée (130) configurée pour recevoir une commande utilisateur ;
un dispositif d'affichage (140) configuré pour afficher une image ; et
un contrôleur (150) configuré pour recevoir des informations supplémentaires relatives à un premier contenu actuellement en cours de lecture par le dispositif de lecture de contenu (200) lorsque le modèle de mouvement détecté du terminal portable (100) remplit des conditions d'un modèle prédéterminé, et pour afficher un deuxième contenu relatif aux informations supplémentaires reçues sur un écran de veille (400) du terminal portable (100), le deuxième contenu étant différent du premier contenu,
dans lequel l'écran de veille (400) est un écran de verrouillage du terminal portable (100), l'écran de verrouillage comprenant un élément de commande pour commander le dispositif de lecture de contenu, et
dans lequel le dispositif de lecture de contenu (200) prend une photo d'une zone prédéterminée, et lorsqu'il est déterminé qu'un utilisateur du terminal portable (100) n'est pas présent dans la zone prédéterminée ou ne regarde pas le dispositif de lecture de contenu (200), le dispositif de lecture de contenu (200) ne transmet pas les informations supplémentaires relatives au contenu au terminal portable (100).

11. Terminal portable selon la revendication 10, dans lequel le contrôleur (150) commande l'affichage (140) pour afficher sur l'écran de veille (400) un élément d'affichage (420) pour afficher les informations supplémentaires relatives au contenu, et un élément d'exécution (430) pour exécuter un service supplémentaire relatif au contenu.

12. Terminal portable selon la revendication 11, dans lequel, lorsqu'une commande utilisateur pour sélectionner l'élément d'exécution (430) pour exécuter le service supplémentaire relatif au contenu est entrée via l'unité d'entrée (130), le contrôleur (150) commande l'affichage (140) pour afficher un écran d'exécution pour exécuter le service supplémentaire correspondant à l'élément d'exécution sélectionné.

13. Terminal portable selon la revendication 10, dans lequel le contrôleur (150) commande l'affichage (140) pour afficher sur l'écran de veille (400) un élément de déverrouillage (410) pour déverrouiller le terminal portable (100).
